# EUROPÄISCHE PATENTSCHRIFT

(11) **EP 3 069 399 B1**
(45) Veröffentlichungstag und Bekanntmachung des Hinweises auf die Patenterteilung: **24.03.2021**
(21) Anmeldenummer: 14795646.0
(22) Anmeldetag: 10.11.2014
(51) Int. Cl.: H01M 4/24, H01M 10/052, H01M 10/056, H01M 4/13, H01M 4/133, H01M 4/36, H01M 4/58, H01M 4/62, H01M 10/0525, H01M 10/0563, H01M 4/02

(54) **WIEDERAUFLADBARE ELEKTROCHEMISCHE LITHIUM ZELLE MIT SCHWEFELDIOXIDHALTIGEM ELEKTROLYTEN**
RECHARGEABLE ELECTROCHEMICAL LITHIUM CELL WITH SULPHUR-DIOXIDE CONTAINING ELECTROLYTES
ÉLÉMENT AU LITHIUM, ÉLECTROCHIMIQUE ET RECHARGEABLE, DOTÉ D'UN ÉLECTROLYTE CONTENANT DU DIOXYDE DE SOUFRE

(30) Priorität: 11.11.2013 DE 102013112385
(43) Veröffentlichungstag der Anmeldung: 21.09.2016
(73) Patentinhaber: High Performance Battery Technology GmbH, 53113 Bonn (DE)
(72) Erfinder: HAMBITZER, Günther, 53113 Bonn (DE)
(74) Vertreter: Keenway Patentanwälte Neumann Heine Taruttis
(86) Internationale Anmeldenummer: PCT/EP2014/074145
(87) Internationale Veröffentlichungsnummer: WO 2015/067795

(56) Entgegenhaltungen:
- EP-A1- 1 923 934
- EP-A1- 1 923 934
- EP-A1- 1 923 934
- EP-A1- 2 360 772
- EP-A1- 2 360 772
- WO-A1-00/79631
- WO-A1-00/79631
- PEARSON T G ET AL: "LVI.?The polysulphides of the, alkali metals. Part II. Lithium", JOURNAL OF THE CHEMICAL SOCIETY, CHEMICAL SOCIETY, LETCHWORTH; GB, 1. Januar 1931 (1931-01-01), Seiten 413-420, XP002686428, ISSN: 0368-1769, DOI: 10.1039/JR9310000413
- PEARSON T G ET AL: "LVI.?The polysulphides of the, alkali metals. Part II. Lithium", JOURNAL OF THE CHEMICAL SOCIETY, CHEMICAL SOCIETY, LETCHWORTH; GB, 1. Januar 1931 (1931-01-01), Seiten 413-420, XP002686428, ISSN: 0368-1769, DOI: 10.1039/JR9310000413
- PEARSON T G ET AL: "LVI.?The polysulphides of the, alkali metals. Part II. Lithium", JOURNAL OF THE CHEMICAL SOCIETY, CHEMICAL SOCIETY, LETCHWORTH; GB, 1 January 1931 (1931-01-01), pages 413-420, XP002686428, ISSN: 0368-1769, DOI: 10.1039/JR9310000413

## Beschreibung

Die Erfindung betrifft eine nichtwässrige wiederaufladbare elektrochemische Batteriezelle mit einer positiven Elektrode, einer negativen Elektrode und einem Elektrolyten. Wiederaufladbare Batteriezellen sind auf vielen technischen Gebieten von großer Bedeutung. Vielfach werden sie für mobile Anwendungen eingesetzt, wie beispielsweise Mobiltelefone, Notebooks und Elektrofahrzeuge.

Eine Anforderung an wiederaufladbare Batterien ist unter anderem eine hohe spezifische Energie bzw. eine hohe Energiedichte. Die Zelle soll möglichst viel elektrische Energie je Gewichts- und Volumeneinheit enthalten. In dieser Hinsicht ist Lithium als aktives Kation oder aktives Metall besonders vorteilhaft.

Daneben gibt es einen großen Bedarf von Batteriezellen für stationäre Anwendungen, wie Netzstabilisierung, Netzpufferung und dezentrale Energieversorgung. Hier ist insbesondere bei hoher Energieeffizienz eine hohe Zykelzahl bei niedrigen Herstellkosten vorteilhaft.

Die vorliegende Erfindung richtet sich sowohl auf Zellen für mobile als auch für stationäre Anwendunger Die Erfindung ist gemäß dem Gegenstand in den Ansprüchen 1 und 12 definiert.

Wiederaufladbare Zellen sind in der Praxis mittlerweile überwiegend Lithium-Ionen-Zellen. Ihre negative Elektrode besteht aus auf Kupfer beschichtetem Kohlenstoff, in den beim Laden Lithiumionen eingelagert werden. Auch die positive Elektrode besteht aus einem Insertionsmaterial, das zur Aufnahme von Ionen des aktiven Metalls geeignet ist. Bei herkömmlichen Batteriezellen kann die positive Elektrode auf Lithiumkobaltoxid basieren, das auf ein Ableitelement aus Aluminium aufgetragen ist. Beide Elektroden sind sehr dünn (Dicke in der Regel kleiner als 100 µm). Beim Laden werden die Ionen des aktiven Metalls aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyts, der die erforderliche lonenbeweglichkeit gewährleistet. Herkömmliche Lithium-Ionen-Zellen enthalten einen Elektrolyten, der in herkömmlichen Zellen aus einem in einem organischen Lösungsmittel oder Lösungsmittelgemisch (z.B. auf Basis von Ethylencarbonat) gelösten Lithiumsalz (z.B. LiPF₆) besteht. Sie werden nachfolgend auch als "organische Lithium-Ionen- Zellen" bezeichnet.

Lithium-Ionen-Zellen enthalten im Normalbetrieb keine Ansammlungen von metallischem Lithium. Problematisch sind organische Lithium-Ionen-Zellen hinsichtlich der Sicherheit.

Sicherheitsrisiken werden insbesondere durch den organischen Elektrolyten verursacht. Wenn eine Lithium-Ionen-Zelle z.B. wegen eines Produkt- bzw. Produktionsfehlers oder Überladens mit metallischer Lithiumabscheidung Feuer fängt oder sogar explodiert, bildet das organische Lösungsmittel des Elektrolyten in Kombination mit anderen aktiven Massen das brennbare Gemisch. Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Diese Maßnahmen sind umso aufwendiger je höher die Kapazität der Zelle und damit das Gefährdungsrisiko sind. Sie führen damit zu erhöhten Kosten und erhöhen zusätzlich Volumen und Gewicht erheblich und vermindern die Energiedichte.

Es besteht ein hohes Bedürfnis nach verbesserten wiederaufladbaren Batteriezellen, die insbesondere folgende Anforderungen erfüllen:
- Sicherheit, auch unter den erschwerten Umweltbedingungen wie in einem Fahrzeug.
- Sehr gute elektrische Leistungsdaten, insbesondere hohe Energiedichte bei gleichzeitig hohen entnehmbaren Strömen, also hoher Leistungsdichte.
- Hohe Lebensdauer, insbesondere hohe Zahl nutzbarer Lade- und Entladezyklen.
- Möglichst niedriger Preis, d.h. kostengünstige Materialien und möglichst einfache Produktionsverfahren.

Eine weitere für die Praxis wichtige Anforderung ist z.B. die Tiefentladefähigkeit.

So ist gerade für eine hohe Zahl von Zellen, die seriell zu Batterien geschaltet werden, eine Entladefähigkeit jeder einzelnen Zelle auf 0 V wünschenswert. Dies ist bei den heutigen organischen Lithium-Ionen-Zellen in der Praxis nicht möglich, da diese bei einer Entladung unter 2,7 V irreversibel geschädigt werden.

Der Erfindung liegt das technische Problem zugrunde, eine Batteriezelle zur Verfügung zu stellen, die diese teilweise widersprüchlichen Anforderungen - insgesamt betrachtet - besser als bisher erfüllt.

Die Erfindung richtet sich insbesondere auf eine Batteriezelle, bei der die aktiven Kationen, die beim Laden der Batteriezelle an der negativen Elektrode durch Einlagerung in ein Wirtsgitter oder durch Legierungsbildung oder durch Abscheidung als Metall reagieren, aus der Alkalimetall-, Erdalkalimetallgruppe oder aus der zweiten Nebengruppe des Periodensystems stammen. Lithium ist besonders bevorzugt. Aus den Gruppen dieser Kationen können auch Metalldithionite gebildet werden, insofern sie nicht elektronisch leitfähig sind. Nachfolgend wird ohne Beschränkung der Allgemeinheit auf Lithium als Kation, das an der negativen Elektrode reagiert, Bezug genommen.

Der im Rahmen der Erfindung verwendete Elektrolyt enthält Schwefeldioxid (SO2). Als " SO2-haltiger Elektrolyt" wird im Rahmen der Erfindung ein Elektrolyt bezeichnet, der SO2 oder Reaktionsprodukte des SO2 nicht nur als Zusatz in geringer Konzentration enthält, sondern bei dem die Beweglichkeit der Ionen, die den Ladungstransport bewirken, zumindest teilweise durch das SO2 oder durch die Reaktionsprodukte des SO2 gewährleistet ist. Im Fall der aktiven Kationen aus der Gruppe der Alkalimetalle wird vorzugsweise Tetrahalogenoaluminat als Anion des Leitsalzes verwendet. Für das aktive Lithiumkation wird vorzugsweise Lithiumtetrachloroaluminat als Leitsalz eingesetzt. Lithiumzellen mit einem SO2-haltigen Elektrolyten werden nachfolgend als Li-SO2-Zellen bezeichnet.

Die Erfindung bezieht sich darüber hinaus auch auf Batteriezellen die neben Schwefeldioxid bzw. durch Reaktion mit Schwefeldioxid erzeugte Substanzen auch andere Elektrolyte enthalten. Diese Elektrolyte können andere Leitsalze (z.B. Halogenide, Oxalate, Borate, Phosphate, Arsenate, Gallate) und andere Lösungsmittel enthalten, die die Beweglichkeit der Ionen gewährleisten. Diese Lösungsmittel können dabei anorganische Lösungsmittel, organische Lösungsmittel oder ionische Flüssigkeiten bzw. Mischungen daraus sein. Als organische Lösungsmittel kommen bevorzugt auch gesättigte Kohlenwasserstoffe in Betracht.

Vorzugsweise ist der Elektrolyt im Wesentlichen frei von organischen Materialien, wobei "im Wesentlichen" dahingehend zu verstehen ist, dass die Menge eventuell vorhandener organischer Materialien so gering ist, dass sie z.B. im Hinblick auf Brennbarkeit kein bedeutendes Sicherheitsrisiko darstellen.

Eine bevorzugte Ausführungsform der Erfindung betrifft eine wiederaufladbare Batteriezelle mit einer negativen Elektrode, einem Elektrolyten und einer positiven Elektrode mit einer porösen Struktur zum Speichern von aktivem Metall, das beim Laden der Zelle aus der Abscheidung der aktiven Kationen resultiert.

Das technische Problem wird gelöst durch eine elektrochemische wiederaufladbare Lithium-Batteriezelle mit einem Gehäuse, einer positiven Elektrode, einer negativen Elektrode und einem Elektrolyten, der ein Leitsalz enthält, wobei der Elektrolyt SO2-haltig ist.

In einem ersten Aspekt betrifft die Erfindung eine wiederaufladbare elektrochemische Batteriezelle mit einer intraporösen Separatorschicht.

In der WO 2008/058685 wird eine wiederaufladbare elektrochemische Batteriezelle mit einer negativen Elektrode, einem Elektrolyten und einer positiven Elektrode beschrieben. Die negative Elektrode weist ein elektronisch leitendes Substrat auf, an dem beim Laden der Zelle ein aktives Metall der negativen Elektrode elektrolytisch abgeschieden wird. Eine poröse Struktur, die die aktive Masse der positiven Elektrode enthält, ist derart in der Nachbarschaft des Substrats der negativen Elektrode angeordnet, dass das beim Laden der Zelle abgeschiedene aktive Metall in die Poren der die aktive Masse der positiven Elektrode enthaltenden porösen Struktur eindringt und dort, zumindest teilweise in metallischer Form, weiter abgeschieden wird.

Als aktive Masse der positiven Elektrode wird eine Komponente der Zelle bezeichnet, die bei der an der positiven Elektrode ablaufenden Redoxreaktion ihren Ladungszustand ändert.

Ein grundlegendes Prinzip der Batterietechnik besteht darin, dass das aktive Metall der negativen Elektrode und die aktive Masse der positiven Elektrode derartig voneinander getrennt sind, dass zwischen ihnen keine elektronische Leitung innerhalb der Zelle möglich ist, weil dadurch die Funktion der Zelle beeinträchtigt wird. Denn der den Redoxreaktionen der beiden aktiven Massen und dem Ionenfluss zwischen den aktiven Massen entsprechende Elektronenfluss soll über die jeweiligen elektronisch leitenden Ableitelemente zu den Anschlusskontakten außerhalb der Zelle geleitet werden. Ein elektronischer Kurzschluss zwischen den aktiven Massen führt zu Ladungsverlusten und über Wärmeproduktion im Extremfall zu Sicherheitsproblemen.

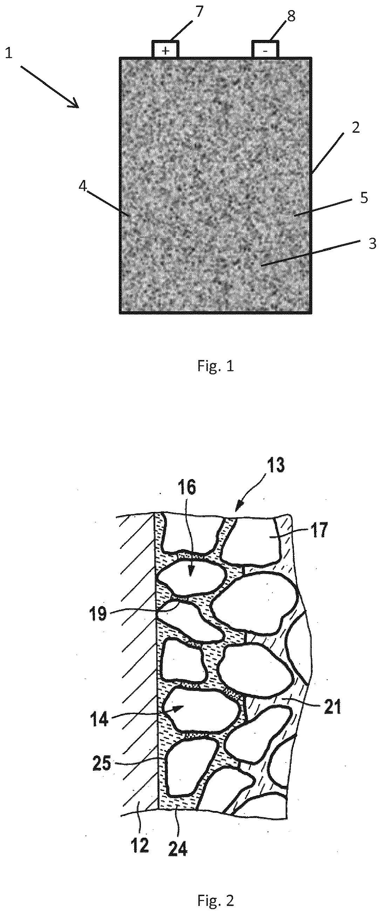

Figur 1 zeigt ein allgemeines Schema einer wiederaufladbaren Batterie 1 mit einem Gehäuse 2 und mindestens einer Batteriezelle 3, die eine positive Elektrode 4 und eine negative Elektrode 5 aufweist. Die Elektroden 4, 5 sind dabei über Ableitelemente gegebenenfalls über in der Batterietechnik übliche Elektrodenanschlüsse mit Anschlusskontakten 7, 8 verbunden, über die die Batterie letztlich geladen bzw. entladen werden kann.
Figur 2 zeigt einen schematischen und nicht maßstäblichen Ausschnitt einer Elektrodenanordnung, die das Eindringen des abgeschiedenen aktiven Metalls in Poren der porösen Struktur verdeutlicht.

Auf Grund der hohen ionischen Leitfähigkeit der SO2-haltigen Elektrolyten - die Leitfähigkeit ist in der Regel mindestens zehnmal höher als die organischer Elektrolyte -, können bei gleicher elektrischer Leistungsabgabe in Batteriezellen mit einem SO2-haltigen Elektrolyten deutlich dickere positive und negative Elektroden verwendet werden als in herkömmlichen Zellen mit organischen Elektrolyten. So sind die Elektrodendicken in SO2-haltigen Elektrolyten in der Regel deutlich dicker als 100 µm, meist dicker als 300 µm oder sogar dicker als 600µm.

Das elektronisch leitende Substrat der negativen Elektrode kann dabei aus einem elektronisch leitenden Ableitelement bestehen, welches vollständig aus Metall, vorzugsweise Nickel oder Edelstahl, oder aus Kohlenstoff, wie Kohlefasergewebe oder -vlies, sein kann. In einer Ausführungsform kann das elektronisch leitende Substrat der negativen Elektrode eine aktive Masse, z.B. Kohlenstoff, in einer als Insertionsmaterial geeigneten Form enthalten. Dabei hat das Ableitelement der negativen Elektrode vorzugsweise eine poröse, also dreidimensionale Struktur, bevorzugt in Form eines Kohlefasergewebes oder -vlieses. Die Porosität der mit aktiver Masse gefüllten negativen Elektrode beträgt dabei höchstens 50%, bevorzugt 30%, wobei geringere Porositäten möglich sind. Bei einer solchen Ausführungsform mit einer lithiumspeichernden Masse wird dann beim Laden der Zelle zunächst ein Teil des aus der Elektrodenreaktion resultierenden Lithiums in der negativen Elektrode gespeichert, jedoch wird mindestens bei einem Teil des Ladens das aktive Metall in metallischer Form in der porösen Struktur der positiven Elektrode abgeschieden.

In einer bevorzugten Ausführungsform, auf die im Folgenden ohne Beschränkung der Allgemeinheit eingegangen wird, kann das elektronisch leitende Substrat der negativen Elektrode der Zelle nur aus einem elektronisch leitendenden dünnen Ableitelement bestehen. Dies können z.B. Bleche oder Streckmetalle sein, vorzugsweise aus Nickel oder Edelstahl oder auch aus vernickelten Metallen, wie Kupfer oder Aluminium, oder auch aus Kohlenstoff, wie Kohlenstoffgewebe oder -vlies. Das Ableitelement hat für die mechanische Festigkeit der Batteriezelle keine wesentliche mechanische Funktion, so dass seine Dicke über den elektronischen Innenwiderstand bei maximaler Leistungsentnahme aus der Zelle festgelegt werden kann. So können bei Zellen mit kleiner Kapazität und mit geringer Leistungsentnahme Dicken von kleiner als 3µm hinreichend sein, bei Hochleistungszellen mit großer Kapazität können auch Dicken von über 100 µm notwendig werden.

Das elektronisch leitende Substrat 12 grenzt über die Zusammenbauschicht an eine die aktive Masse der positiven Elektrode enthaltende poröse Struktur 13 (poröse positive Elektrodenschicht) derart an, dass beim Laden der Zelle abgeschiedenes Lithium (aktive Metall der negativen Elektrode) in ihre Poren 14 eindringt. Das elektronisch leitende Substrat 12 der negativen Elektrode ist dabei sehr viel dünner als die poröse positive Elektrodenschicht. Vorzugsweise ist die poröse positive Elektrodenschicht 13 mindestens zehnmal so dick wie das elektronisch leitende Substrat 12.

Die Elektroden 4 und 5 sind in einer bevorzugten Ausführungsform nur durch die Zusammenbauschicht in getrennten Schichten, d.h. makroskopisch getrennten Teilräumen der Zelle angeordnet. Die aktive Masse der positiven Elektrode ist zugleich ein struktureller Bestandteil einer porösen Schicht, in deren Poren das Lithium beim Laden der Zelle aufgenommen und zumindest teilweise in metallischer Form abgeschieden wird. Somit ist die übliche räumliche Trennung der Zelle in gesonderte und makroskopisch durch einen Separator voneinander getrennte Schichten bis auf die Zusammenbauschicht nicht gegeben. Die Zelle enthält in einer bevorzugten Ausführungsform, wie unten beschrieben, makroskopisch nur noch die beiden in den Figuren dargestellten Funktionsschichten, nämlich das elektronisch leitende Substrat 12 der negativen Elektrode und die poröse positive Elektrodenschicht 13.

Zur Vermeidung von elektronischen Kurzschlüssen an der Grenzfläche zwischen dem Ableitelement der negativen Elektrode und der die aktive Masse der positiven Elektrode enthaltenden porösen Struktur, die während des Zusammenbaus der Zelle auftreten können, kann es zweckmäßig sein, eine zusätzliche und im Wesentlichen nur für den Zusammenbau, d.h. das Assemblieren der Zelle, notwendige Schicht, die Zusammenbauschicht, zwischen den beiden Elektroden vorzusehen, durch die eine elektronische Leitung verhindert wird, die aber für das aus der Elektrodenreaktion an der negativen Elektrode beim Laden der Zelle resultierende aktive Metall passierbar ist.

Dazu können insbesondere das Substrat der negativen Elektrode oder die äußere Oberfläche der porösen positiven Elektrodenschicht mit einer elektronisch isolierenden aber für Lithiumionen durchlässigen, also z.B. porösen Schicht beschichtet sein, die auch für das beim ersten Laden resultierende aktive Metall passierbar ist. Vorzugsweise sind die Schichtdicken dieser Zusammenbauschicht möglichst gering, z.B. kleiner als 20 µm. Entweder wird auf der positiven oder auf der negativen Elektrode eine Beschichtung mit feingemahlenen Partikeln, wie keramisches Aluminiumoxid oder Siliziumdioxid, oder wie salzartiges Lithiumsulfid oder Lithiumchlorid, die z.B. teflonartig, z.B. mit THV, gebunden sind, aufgebracht.

Bevorzugt werden jedoch solche Partikel verwendet, die, wie unten als elektrolytbildendes Lithiumdithionit beschrieben, mit Schwefeldioxid und Aluminiumchlorid zu Elektrolyt reagieren, so dass sich die Schicht nach dem Befüllen z.B. mit einer Lösung aus Schwefeldioxid und Aluminiumchlorid teilweise oder vollständig auflöst. Hierbei ist die poröse positive Elektrodenschicht so eng an dem Substrat der negativen Elektrode angeordnet, dass zwischen diesen praktisch keine Hohlräume mehr vorhanden sind und die chemischen Reaktionen stattfinden können. Die poröse positive Elektrodenschicht, in Figur 2 die Schicht 13, bildet zusammen mit dem Elektrolyten sowie dem Ableitelement der negativen Elektrode die Batteriezelle, die damit einen sehr flachen Aufbau aufweist.

In einer alternativen Ausführungsform ist auch der Einbau eines sehr dünnen, porösen, elektronisch isolierenden Schichtmaterials, wie beispielsweise eines Glasgewebes, das ein späteres Durchdringen des aktiven Metalls nicht behindert, möglich.

Weiterhin zeigt die Figur 2 strukturbildende Partikel 16 der porösen positiven Elektrodenschicht 13, die bei der dargestellten Ausführungsform aus der aktiven Masse der positiven Elektrode 4 bestehen. Die strukturbildenden Partikel sind dabei in so engem und festem Kontakt, dass die erforderliche elektronische Leitfähigkeit gegeben ist. Die Partikel, bevorzugt damit die Oberfläche der positiven Elektrode, sind mit Kohlenstoff, bevorzugt Graphit oder einem Sulfid bedeckt. Die strukturbildenden Partikel 16 sind weiterhin mittels eines Bindemittels 19 miteinander verbunden, dessen Menge so bemessen ist, dass es nur dort konzentriert ist, wo die strukturbildenden Partikel 16 aneinander angrenzen, im Übrigen aber zahlreiche Verbindungskanäle verbleiben. Diese Verbindungskanäle zwischen den strukturbildenden Partikeln, also zwischen den Partikeln der aktiven Masse der positiven Elektrode, sind die Poren 14 der porösen Struktur. Der Anteil der aktiven Masse in der porösen Struktur der positiven Elektrode beträgt dabei bevorzugt 50%, bevorzugt mindestens 80%.

In der bevorzugten Ausführungsform ist die poröse Struktur der positiven Elektrode so ausgestaltet, dass das Porenvolumen zur Aufnahme des beim Laden der Zelle abgeschiedenen aktiven Metalls (Lithium) geeignet ist, sodass ein zusätzliches Aufnahmevolumen für das beim Laden der Zelle abgeschiedene aktive Metall nicht notwendig ist. Die Porosität der positiven Elektrodenschicht 13 sollte damit so hoch sein, dass das gesamte Porenvolumen nur unwesentlich größer ist als das Volumen des maximal beim Laden an dem Substrat der negativen Elektrode abgeschiedenen aktiven Metalls. Da das in dem SO2-haltigen Elektrolyten abgeschiedene aktive Metall der negativen Elektrode in Form von Whiskern abgeschieden wird, sollte der mittlere Porendurchmesser der porösen positiven Elektrodenschicht vorzugsweise in der Größenordnung der Durchmesser der Metallwhisker liegen. Da die Berechnung auf Basis des Berthelot-Roth'schen Produktes für die Explosionssicherheit eine homogene Verteilung der Komponenten voraussetzt, sollte für die Erreichung einer praktischen Explosionssicherheit der mittlere Porendurchmesser 500µm, bevorzugt 100µm und besonders bevorzugt 10µm nicht überschreiten.

Zur Verbesserung der elektronischen Leitfähigkeit der Elektroden kann für den Fall, dass die elektronische Leitfähigkeit der aktiven Masse nicht ausreichend ist, in dem strukturbildenden Material ein elektronisch leitfähiges Material als Leitfähigkeitsverbesserer enthalten sein, sodass die aktive Masse einen sogenannten Leitfähigkeitsverbesserer aufweist. Als Leitfähigkeitsverbesserer eignen sich beispielsweise Ruße, Graphit, Metallflitter. Der Gewichtsanteil des Leitfähigkeitsverbesserers an der Elektrode hängt von der elektronischen Leitfähigkeit der aktiven Masse ab und sollte bevorzugt 10% des Gewichts der aktiven Masse nicht übersteigen.

In einer Ausführungsform können die strukturbildenden Partikel zur Bildung der die aktiven Massen enthaltenden Struktur in einen Schaum, Filz, Gewebe oder Vlies aus Metall, wie beispielsweise aus Nickel, Wolfram, vernickeltem Aluminium oder Kupfer, eingebracht werden. Bevorzugt sind die Schäume, Filze, Gewebe oder Vliese kohlenstoffbeschichtet. Besonders bevorzugt und neu sind elektronische Leiter aus Kohlenstoff, wie Kohlefasergewebe und - vlies. Es ist auch möglich, die strukturbildenden Partikel durch Pressen auf ein Blech oder Streckmetall aufzubringen.

Je nach Haftung der strukturbildenden Partikel untereinander oder der Größe der Partikel z.B. in Relation zu den Hohlräumen im Metallschaum ist es für die mechanische Festigkeit der Elektrode notwendig, dass die Elektrode ein Bindemittel enthält. Hier haben sich für die positive Elektrode insbesondere fluorierte Bindemittel, wie THV oder Teflon, bewährt. In einer vorteilhaften Ausführungsform ist das Bindemittel in einem relativ geringen Gewichtsanteil in der Elektrode enthalten, insbesondere sind Bindemittelanteile von weniger als 10% des Gewichts der aktiven Masse besonders bevorzugt.

In der allgemeinen Ausführungsform sind die Poren 14 der Schicht 13 vor dem ersten Ladevorgang mit Elektrolyt 21 gefüllt. Verfahren, durch die gewährleistet werden kann, dass der Elektrolyt beim Befüllen auch in feine Poren einer porösen Schicht eindringt, sind bekannt. Ein geeignetes Verfahren ist beispielsweise in der WO 2005/031908 beschrieben. Der Elektrolyt ist dabei schwefeldioxidhaltig, d.h. SO2-haltig, wobei das Volumen des in eine Batteriezelle gefüllten Elektrolyten höchstens doppelt so groß wie das Volumen der freien Poren der porösen Struktur der positiven Elektrode ist, bevorzugt höchstens dem einfachen freien Volumen der Poren der positiven Elektrode entspricht. Damit weist die Batteriezelle nur das für den effizienten Betrieb der Zelle notwendige Volumen an Elektrolyt auf. Dies führt zu einer inhärent sicheren Batteriezelle.

Weiterhin zeigt Figur 2, dass das aktive Metall 24, beispielsweise Lithium, ausgehend von der negativen Elektrode in die Poren 14 der porösen positiven Elektrodenschicht 13 hineinwächst, wenn es beim Laden der Zelle in metallischer Form abgeschieden wird.

Die elektronische Trennung der aktiven Massen wird bei herkömmlichen wiederaufladbaren Batteriezellen dadurch erreicht, dass sie durch einen Separator in zwei räumlich getrennten Schichten angeordnet sind. Der Separator ist dabei elektronisch nicht leitend, ermöglicht aber die ionische Leitung, und kann typischerweise eine poröse, d.h. ionendurchlässige, Folie oder ein Glasvlies sein. Diese erforderliche Trennung der aktiven Massen 24, 17 der beiden Elektroden wird hier durch eine intraporöse Separatorschicht 25 gewährleistet, die die gesamte Oberfläche der porösen positiven Elektrodenschicht 13 bedeckt.

In Figur 2 ist diese Schicht 25 als Umhüllung der strukturbildenden Partikel 16, also der aktiven Masse der positiven Elektrode, schematisch gezeigt. Mit anderen Worten bedeckt die intraporöse Separatorschicht die Oberfläche der Poren, in denen das Lithium beim Ladevorgang abgeschieden wird.

Beim Laden der Batteriezelle wächst Lithiummetall in einem SO2-haltigen Elektrolyten in Form von zylindrischen Fäden mit einem Durchmesser von wenigen µm auf, sogenannten Whiskern. Dabei beginnen die Whisker an dem elektronisch leitenden Substrat der negativen Elektrode und wachsen in Richtung der positiven Elektrode. Die Lithiumoberfläche der Whisker bedeckt sich bei diesem Wachstum durch Reaktion des Lithiums mit Schwefeldioxid mit Lithiumdithionit. Dabei bildet das gegenüber dem Elektrolyten elektronisch isolierende Lithiumdithionit mindestens eine geschlossene Monolage.

Träfen die wachsenden Lithiummetallwhisker auf eine elektronisch leitende Oberfläche der positiven Elektrode, beispielsweise eine Lithiumkobaltoxidoberfläche, so würde ein elektronischer Kurzschluss entstehen.

Ein Kurzschluss tritt jedoch überraschenderweise nicht auf, wenn der Lithium-Whisker gegen eine Oberfläche einer positiven Elektrode wächst, die mit einer Schicht aus Lithiumdithionit bedeckt ist. Eine solche Lithiumdithionitschicht 25, welche die Oberfläche der positiven Elektrode vollständig bedeckt und die positive Elektrode elektronisch von den Whiskern isoliert, kann in situ nach dem Assemblieren einer Batteriezelle und Befüllen mit SO2-haltigen Elektrolyten, durch geeignete Auswahl der positiven Masse, wie nachfolgend beschrieben, erzeugt werden.

Im SO2-haltigen Elektrolyten aus Lithiumtetrachloroaluminat und Schwefeldioxid werden Elektrodenpotentiale gegen in den Elektrolyten eintauchendes metallisches Lithium (vs. Li/Li⁺) gemessen.

Auf der Oberfläche eines positiven Substrats, d.h. der Oberfläche der Partikel der positiven aktiven Masse, findet die Reduktion von Schwefeldioxid zu Lithiumdithionit erst bei Potentialen von gleich bzw. kleiner als 3 V vs. Li/ Li⁺ statt. Dabei bildet sich mindestens eine Monolage dieser Deckschicht nach folgender Formel aus:

2 Li⁺ + 2e⁻ + 2 SO2 ⇔ Li2S2O4 (<= 3,0 V vs. Li/Li⁺) (Gl. I)

Neben der Unterschreitung einer Potentialschwelle ist auch die Art der Substratoberfläche der aktiven Masse der positiven Elektrode entscheidend dafür, ob oder bei welchen Potentialen eine Reduktion des Schwefeldioxids stattfindet und zu welchen Produkten diese führt.

Aus chemischer Sicht erfolgt die Reduktion von Schwefeldioxid zu Lithiumdithionit sehr gut an Oberflächen, die sich gemäß HSAB-Prinzip wie weiche Basen verhalten, also gut polarisierbare Elektronenpaare, wie Pi- oder D-Orbitale, dem eher weichsauren Schwefel im Schwefeldioxid als Bindungspartner zur Verfügung stellen. Hierunter fallen Substanzen wie Graphit oder elektronisch gut angebundene Sulfide. Auf Graphit bildet sich die Lithiumdithionitschicht in mindestens einer Monolage bei 3,0 V vs. Li/ Li⁺ praktisch sofort aus. Diese Schicht ist z.B. auf Graphit stabil bis in die Lithiumabscheidung.

Wird, wie unten beschrieben, ein Lithiumdithionitmolekül chemisch umgesetzt, so bildet sich dieses auf der Oberfläche sofort nach, wenn das Potential der positiven Elektrode gleich oder kleiner 3,0 V vs. Li/ Li⁺ ist.

Bei Lithiumsulfid Li2S als aktiver positiver Masse wird das Li2S bei ca. 2 V vs. Li/Li+ zu Schwefel oxidiert. Dabei wird das Schwefeldioxid des Elektrolyten auf der Oberfläche der positiven Elektrode, also der Partikel 16, direkt zu Lithiumdithionit reduziert. Dementsprechend bildet sich die gewünschte Lithiumdithionitschicht überall da aus, wo die aktive Masse der positiven Elektrode in direktem Kontakt mit dem SO2-haltigen Elektrolyten kommt, also bei der Elektrolytbefüllung nach dem Assemblieren der Batteriezelle, wenn der Elektrolyt in die Poren der porösen Struktur der positiven Elektrode eindringt.

Diese Reaktion entspricht der Reaktion eines Ladevorgangs an der positiven Elektrode und verringert damit die Kapazität der Batteriezelle, da die zur Entstehung der Lithiumdithionitschicht gebrauchten Lithiumionen nicht mehr zur metallischen Abscheidung beim Ladevorgang zur Verfügung stehen. Dies kann jedoch durch eine geeignete Kompensationsmaßnahme, wie weiter unten beschrieben, praktisch kompensiert werden.

Die gewünschte Lithiumdithionitschicht auf der Oberfläche der positiven porösen positiven Elektrodenschicht, also auf der Oberfläche der Partikel der aktiven Masse der positiven Elektrode, bildet sich also in einer Ausführungsform genau dann aus, wenn die positive aktive Masse ein Redoxpotential von kleiner oder gleich 3,0 Volt vs. Li/Li⁺ aufweist.

Als Beispiel einer aktiven positiven Masse eines 3V-System für die bevorzugte Ausführungsform sei das Lithiumeisenphosphat aufgeführt. Da das heute kommerziell erhältliche Lithiumeisenphosphat durchweg mit einer Kohlenstoffschicht bedeckt ist, ist eine derdie obigen erwähnte bevorzugte Voraussetzungen der Bedeckung der porösen positiven Elektrodenschicht mit Kohlenstoff bereits erfüllt.

Im Potentialbereich zwischen ca. 3,0 V und 4,0 V vs. Li/ Li⁺ wird ein chemisch umgesetztes Lithiumdithionitmolekül nicht ersetzt, so dass die intraporöse Separatorschicht Lücken aufweisen kann, an denen Kurzschlüsse entstehen können.

Bei ungefähr 4,0 V vs. Li/ Li⁺ startet in dem SO2-haltigen Elektrolyt eine Überladereaktion unter Bildung von Sulfurylchlorid, das wiederum das Lithiumdithionit oxidativ umsetzt. Bei dieser Überladereaktion wird das Anion des Leitsalzes, hier das Tetrachloroaluminat, an der positiven Elektrode zu Chlor oxidiert, wobei das Chlor mit Schwefeldioxid zu Sulfurylchlorid weiterreagiert. Bei welchem Potential diese Reaktion startet hängt stark von der Zusammensetzung des Elektrolyten und der Temperatur ab und lässt sich meßtechnisch leicht ermitteln. Auf jeden Fall sollte diese Überladereaktion vermieden werden.

Die oben beschriebenen Potentialintervalle schränken die Auswahl an positiven Aktivmassen ein. Tabelle 1 listet die Redoxpotentiale mit ihren Lade- und Entladeintervallen einiger hier möglichen positiven aktiven Massen auf. Wichtig für die Auswahl der positiven aktiven Masse ist die oben angeführte Bedingung, dass die positive aktive Masse bis maximal unter 4,0 Volt vs. Li/ Li+ geladen werden darf.

**Tabelle 1**

| Material | Mittleres Potential V vs. Li/Li⁺ | Praktische spezifische Energie bzgl. Aktivmaterial Wh/ kg |
|---|---|---|
| 3V-Systeme: | | |
| LiFePO₄ (LFP) | 3,45 | 587 |
| LiV₃O₈ | 3,2 | 960 |
| LiMnO₂ | 3,0 | 585 |
| LiFeBO₃ | 3,0 | 595 |

| 2V-Systeme: | | |
|---|---|---|
| LiTiS₂ | 2,1 | 426 |
| Li₂S | 2,0 | 800 |
| Li₄Ti₅O₁₂ | 1,5 | 263 |

In einer bevorzugten Ausführungsform bieten sich als positive aktive Massen in dem SO2-basierenden Elektrolyten für den Potentialbereich kleiner bzw. gleich 3,0 V vs. Li/ Li⁺ oxydische, wie Li₄Ti₅O₁₂, oder schwefelhaltige, wie Li₂S oder LiTiS₂, oder sonstige aktive Massen an, deren Ein- und Auslagerungspotential bzw. Redoxpotential für die Lithiumionen unterhalb 3,0 V vs. Li/ Li⁺ liegt. Aktive Massen der positiven Elektrode mit diesem Redoxpotential stellen damit sicher, dass die Oberfläche der porösen positiven Elektrodenschicht dauerhaft von einer Lithiumdithionitschicht geschützt ist.

Das Potential der positiven Elektrode sollte vorzugsweise dauerhaft kleiner bzw. gleich 3,0 V vs. Li/ Li⁺ sein. Ein ein- oder mehrmaliges Laden bis über 3,0 V jedoch unter 4,0 V vs. Li/ Li⁺ ist möglich. Zwar wird das Lithiumdithionit dabei auf der positiven Elektrode in Abhängigkeit von dem weiter unten beschriebenen Selbstentladeprozess umgesetzt, jedoch bildet sich - wie oben beschrieben - die Lithiumdithionitschicht auf der Oberfläche der positiven Elektrode nach, sobald ein Potential von 3,0 V vs. Li/Li⁺ erreicht oder unterschritten wird.

Bevorzugt ist die Oberfläche der porösen positiven Elektrodenschicht, bevor diese von der Lithiumdithionitschicht bedeckt wird, mit z.B. Graphit oder ähnlichem Kohlenstoff oder Sulfiden weitestgehend oder vollständig bedeckt.

Als besonders bevorzugt sind dabei aktive positive Massen aus Lithiumsulfid-Kohlenstoff (Li₂S/C), die z.B. nach einem trockenen Kugelmühlenverfahren aus Lithiumsulfid und Carbon Black oder durch ein spezielles chemisches Verfahren gemäß WO 2012/171889 hergestellt werden.

In einem alternativen Ausführungsbeispiel kann eine positive aktive Masse mit einem Redoxpotential von mehr als 3,0 Volt vs. Li/Li⁺ verwendet werden. Zur Entstehung der Lithiumdithionitschicht auf der Oberfläche der positiven Elektrode, also den Partikeln der positiven Masse, welche die poröse Struktur bilden, ist es dabei vor dem ersten Betrieb, d.h. dem ersten Aufladen der Zelle, notwendig das Potential der positiven Elektrode auf einen Wert kleiner oder gleich 3,0 Volt vs. Li/Li⁺ zu senken, sodass sich die Lithiumdithionitschicht ausbilden kann.

Nachfolgende Tabelle 2 listet die Redoxpotentiale mit ihren Lade- und Entladeintervallen einiger bekannter positiver Aktivmassen mit einem Redoxpotential von nahe 4 Volt vs Li/Li⁺ auf, die in der Regel bis über 4,0 V vs. Li/ Li+ geladen werden und wegen der Bildung von Sulfurylchlorid und der daraus resultiernden Zerstörung der Lithiumdithionitschicht als positive aktive Masse in der Regel nicht in Frage kommen:

**4V-Systeme:**

| Material | Mittleres Potential V vs. Li/Li⁺ | Praktische spezifische Energie bzgl. Aktivmaterial Wh/ kg |
|---|---|---|
| LiCoO₂ (LCO) | 3,9 | 546 |
| LiNi_{0,8}Co_{0,15}Al_{0,05}O₂ (NCA) | 3,8 | 760 |
| LiNi_{1/3}Co_{1/3}Mn_{1/3}O₂ (NMC) | 3,8 | 650 |
| LiMn₂O₄ (LMO) | 4,1 | 492 |

In einem weiteren Aspekt betrifft die Erfindung einen selbstentladefesten und SO2-haltigen Elektrolyten zur Verwendung in wiederaufladbaren Batteriezellen.

Obwohl der SO2-haltige Elektrolyt hier im Kontext der oben beschriebenen Batteriezelle beschrieben ist, kann der Elektrolyt für andere geeignete und hier nicht explizit beschriebene Batteriezellen verwendet werden, die für SO2-haltige Elektrolyte ausgelegt sind.

In einer bevorzugten Ausführungsform kann der nachfolgend beschriebene Elektrolyt insbesondere in Verbindung mit der oben beschriebenen und Lithiumdithionit-bedeckten positiven Elektrode verwendet werden. Weiterhin kann der hier beschriebene neue Elektrolyt mit einer positiven Elektrode betrieben werden, welche wie nachfolgend beschrieben Lithiumsulfid, Li2S, als aktives Material verwendet.

Im Folgenden wird ohne Beschränkung der Allgemeinheit der SO2-haltige Elektrolyt LiAlCl4 x n SO2 behandelt. In der Literatur beschrieben sind hierbei Elektrolyte, bei denen der Faktor n zwischen 1,5 und 22 variiert wird.

Für den Elektrolyten mit n=1,5 ist bekannt, dass dieser bei einer Dichte von 1,7 kg/l ungefähr 6,2 Mol Lithiumtetrachloroaluminat und ca. 9,4 Mol Schwefeldioxid pro Liter enthält. Die wasserklare Flüssigkeit hat bei Raumtemperatur einen Schwefeldioxiddampfdruck von kleiner als 0,1 Bar. Der Siedepunkt liegt bei 70°C.

Der Elektrolyt mit n=4,5 enthält bei einer Dichte von ebenfalls fast 1,7 kg/l ungefähr 3,7 Mol Lithiumtetrachloroaluminat und ca. 16,5 Mol Schwefeldioxid pro Liter. Die wasserklare Flüssigkeit hat bei Raumtemperatur einen Schwefeldioxiddampfdruck von mehr als 2 Bar.

Der Elektrolyt mit n=22 enthält bei einer Dichte von fast 1,6 kg/l 1 Mol Lithiumtetrachloroaluminat und 22 Mol Schwefeldioxid pro Liter. Die wasserklare Flüssigkeit hat bei Raumtemperatur einen Schwefeldioxiddampfdruck von fast 3 Bar.

Auf Grund des niedrigen Schwefeldioxidgehalts und des niedrigen Dampfdruckes bei Raumtemperatur ist ein Elektrolyt mit kleinem n, wie n=1,5, für den Einsatz in wiederaufladbaren Batteriezellen bevorzugt, da derartig ausgestaltete Batteriezellen nur eine vergleichsweise geringe mechanische Festigkeit, z.B. des Gehäuses, aufweisen müssen.

Wie auch in der Patentliteratur beschrieben, kann ein derartiger Elektrolyt aus Lithiumchlorid, Aluminiumchlorid und Schwefeldioxid hergestellt werden. Besonderer Wert wird dabei auf die Trockenheit des erhaltenen Elektrolyten gelegt, die insbesondere aufwendige Verfahren zur Trocknung des stark hygroskopischen Lithiumchlorids oder von Mischungen bzw. Schmelzen von Lithiumchlorid und Aluminiumchlorid nötig machen.

Wasser im Elektrolyten ist insofern stark störend, da dieses mit Aluminiumchlorid zu Chlorwasserstoff und Aluminiumoxychloriden reagiert. Der Chlorwasserstoff wird an der negativen Elektrode zu Wasserstoff reduziert, der zu einer deutlichen Druckerhöhung in der Zelle und damit zur Zerstörung der Batteriezelle durch Platzen führen kann.

An der positiven Elektrode reagiert Chlorwasserstoff einmal unter Einlagerung von Protonen ins Wirtsgitter, welches zur Verminderung der Kapazität der Elektrode führt, und zusätzlich oft unter irreversibler Schädigung des Wirtsgitters durch z.B. Reaktion von Übergangsmetallionen des Wirtsgitters mit dem Chlorid des Chlorwasserstoffs.

Der Wassergehalt des Elektrolyten wird mit der an sich bekannten Methode nach Karl-Fischer gemessen, die genau genommen aber den Gehalt an Aluminiumoxychloriden bestimmt. Gemäß der WO2011EP00506 wären kleine Karl-Fischer-Werte besonders vorteilhaft.

Wie oben beschrieben bildet sich unterhalb eines Potentials von 3,0 V vs. Li/Li+ auf einer positiven, graphithaltigen Elektrode im SO2-haltigen Elektrolyten durch Reduktion von Schwefeldioxid eine Deckschicht aus Lithiumdithionit aus. Wird das Potential dieser deckschichtbehafteten Graphitelektrode im SO2-haltigen Elektrolyten durch ein entsprechendes elektronisches Gerät (Potentiostaten) konstant z.B. bei 2,8 V vs. Li/Li+ gehalten, so lässt sich ein abfallender Strom beobachten, der der Selbstentladung der Graphitelektrode entspricht.

Dieser Selbstendladestrom ist bei höherem SO2-Gehalt geringer als bei niedrigem. Obwohl Lithiumdithionit auf der Oberfläche der positiven Elektrode ein stabiles Molekül ist, zeigt sich mit dieser Selbstentladereaktion, dass ein chemischer Umsatz von Lithiumdithionit mit Verbrauch und anschließend aus der Potentiallage herleitbarer Neubildung von Lithiumdithionit erfolgt.

Während der Herstellung des Elektrolyten wird vorzugsweise darauf geachtet, dass Lithiumchlorid im Überschuss eingebracht wird. Damit ist der hergestellte Elektrolyt entsprechend der schwachen Löslichkeit von Lithiumchlorid im unteren Prozentbereich lithiumchloridgesättigt. Ein saurer, mit einem stöchiometrischen Überschuss an Aluminiumchlorid hergestellter Elektrolyt erhöht ebenso wie eine Temperaturerhöhung den Selbstentladestrom der Graphitelektrode.

Diese Reaktion ist jedoch verlangsamt bzw. kommt zum Erliegen, wenn der Elektrolyt einen hohen Anteil an Oxiden enthält und damit einen hohen Karl-Fischer-Wert besitzt. Dies lässt sich folgendermaßen erklären.

Im Potentialbereich unterhalb der Überladereaktion in dem SO2-haltigen Elektrolyten gibt es nur eine einzige Reaktionsfolge die zum Umsatz von Lithiumdithionit im Sinne einer Selbstentladereaktion führt.

Ausgangsreaktion der Reaktionsfolge ist die Autodissoziation des gelösten Leitsalzes, hier am Beispiel Lithiumtetrachloroaluminat in Schwefeldioxid:

Li⁺ + AlCl4⁻ ⇔ LiCl + AlCl3

Das Lithiumion reagiert mit einem Chlorid des Tetrachloroaluminatanions unter Bildung von Aluminiumchlorid und Lithiumchlorid. Das Gleichgewicht liegt unter Normalbedingungen nahezu vollständig auf der linken Seite.

Das auf der Oberfläche des Graphits gemäß Gl. I gebildete Lithiumdithionit ist in dem SO₂-haltigen Elektrolyten stabil. Es reagiert nur mit dem autodissoziativ gebildeten Aluminiumchlorid in der Reaktionsfolge dann folgendermaßen zu Lithiumthiosulfat, Schwefeldioxid, Lithiumion und Oxochloroaluminat sowie Chloridion ab:

2 Li2S2O4 + AlCl3 ⇔ Li2S2O3 + 2 SO2 + Li⁺ + AlOCl2⁻ + Li⁺ + Cl⁻ (Gl. II)

Diese Reaktion ist eine Gleichgewichtsreaktion. Solange Lithiumthiosulfat sich noch auf der Oberfläche befindet, ist die Rückreaktion zu Lithiumdithionit u.a. von der Konzentration der Reaktanden der rechten Seite der Gleichung abhängig. Wie schon oben ausgeführt, ist die Löslichkeit des Chloridions gering, so dass insbesondere in einer chloridgesättigten Lösung Lithiumchlorid ausfallen wird. Die höhere Entropie liegt auf der rechten Seite, so dass mit zunehmender Temperatur das Gleichgewicht sich nach rechts in Richtung der Produkte verschiebt. Das bei höherer Temperatur neu einzustellende Gleichgewicht erfordert also eine höhere Konzentration der Produkte. Ebenso erhöht sich die Reaktionsrate, so dass auch deswegen der Selbstentladestrom der Graphitelektrode, wie gemessen, steigt.

Hierbei ist unter Oxochloroaluminat nicht nur das AlOCl₂⁻ sondern auch weitere Aluminium, Chlor und Sauerstoff enthaltende Anionen, wie z.B. Al₂O₂Cl₄²⁻ oder auch Al₂O₃d₂²⁻. Diese sind als Aluminiumoxychloriden, wie oben ausgeführt, in Summe quantitativ mit der Karl-Fischer-Analytik nachweisbar.

Das gebildete Lithiumthiosulfat reagiert mit dem Tetrachloroaluminatanion langsam in einer weiteren Gleichgewichtsreaktion zu den Produkten Schwefel, Schwefeldioxid, Chloridion, Lithiumion und Oxochloroaluminat:

Li2S2O3 + Li⁺ + AlCl4⁻ ⇔ S + SO2 + Li⁺ + AlOCl2⁻ + 2 Li⁺ + 2 Cl⁻

Auch hier fällt bei Überschreitung des Löslichkeitsproduktes Lithiumchlorid aus. Gleichzeitig wird gemäß Gl. I das Lithiumdithionit nachgebildet, sodass sich die Deckschicht auf der positiven Elektrode selbständig nachbildet.

Bei Potentialen unter ca. 2,0 V vs. Li/ Li⁺ (s.u.) wird der gebildete Schwefel, sofern elektronisch angebunden, weiter zu Lithiumsulfid reduziert.

Die Gesamtbruttoreaktion (ohne Neubildung von Lithiumdithionit) lautet dann:
a) Für den Potentialbereich zwischen 2 V und 3 V vs. Li/ Li⁺:

   4 Li⁺+ 4 e⁻+ 1 SO2 + 2 LiAlCl4 ⇔ S + 2 Li⁺ + 2 AlOCl2⁻ + 4 LiCl (Gl. IIIa)
b) Für den Potentialbereich zwischen 0 V und 2 V vs. Li/ Lⁱ⁺:

   6 Li⁺ + 6 e⁻ + 1 SO2 + 2 LiAlCl4 ⇔ Li2S + 2 Li⁺ + 2 AlOCl2⁻ + 4 LiCl (Gl. IIIb)

Bei diesen Reaktionen fallen Lithiumchlorid (aus dem bevorzugt lithiumchloridgesättigten Elektrolyten), Schwefel bzw. Lithiumsulfid als Feststoffe aus.

Das Gleichgewicht gemäß G1. II kann für den Fall des bevorzugt lithiumchloridgesättigten Elektrolyten folgendermaßen beschrieben werden:

K = k x [SO2]² x [Li⁺] x [AlOCl2⁻] / [AlCl3] (Gl. IV)

Wobei K und k beliebige reelle Konstanten sind. Unter Einbeziehung der Gleichung für die Autodissoziation folgt damit:

K' = k' x [SO2]² x [Li⁺] x [AlOCl2⁻] / ([Li⁺] x [AlCl4⁻]) (Gl. IVa)

wobei K' und k' wiederum beliebige reelle Konstanten sind.

Ist die Gleichgewichtsbedingung gemäß Gl. IVa erfüllt, so findet keine weitere Selbstentladereaktion statt, wobei die Schwefeldioxidkonzentration quadratisch und die Lithiumoxochloroaluminatkonzentration linear in die Gleichung eingehen.

Würde man also eine Li-SO2-Zelle, d.h. eine Batteriezelle mit Lithium als aktivem Kation und einem schwefeldioxidhaltigen Elektrolyten, die z.B. Graphit als aktive Masse der negativen Elektrode enthält, mit herkömmlichen Elektrolyten befüllen und dann laden, so findet die oben beschriebene Selbstentladereaktion mit Bildung von Lithiumoxochloroaluminat solange statt, bis das Gleichgewicht gemäß Gl. IVa eingestellt ist. Diese Selbstentladereaktion, die an der negativen Elektrode gemäß Gleichung Gl. Illb abläuft, kann, je nachdem wie hoch die Schwefeldioxidkonzentration des herkömmlichen Elektrolyten ist, einen Großteil oder die Gesamtkapazität der Zelle verzehren. Durch beständiges Laden und Entladen der Zelle wird die Selbstentladereaktion an der negativen Elektrode beschleunigt, da beim Laden durch die Volumenzunahme des Graphits immer wieder frische Graphitoberfläche erzeugt wird. Bei Temperaturerhöhung wird die Selbstentladungsrate der Zelle gesteigert und das Gleichgewicht in Richtung höhere Schwefeldioxid- bzw. höhere Oxochloroaluminatkonzentration verschoben.

Die Zeitdauer, bis bei gegebener Temperatur ein Gleichgewicht erreicht wird bzw. bis die Kapazität der Zelle vollständig aufgezehrt ist, beträgt in Regel mehrere Monate bis Jahre und erfordert viele hundert oder tausend vollständige Lade- und Entladezyklen. Eine Batteriezelle mit einem herkömmlichen schwefeldioxidhaltigen Elektrolyten würde also erst nach langer Zeit bzw. einer großen Zahl von Lade- und Entladezyklen ein Gleichgewicht erreichen, wobei dann die Kapazität der Batteriezelle größtenteils oder vollständig aufgezehrt und damit unbrauchbar wäre. Eine solche Batteriezelle weist damit den Nachteil einer beständigen Selbstentladung auf.

Damit besteht Bedarf für einen neuen SO2-haltigen Elektrolyten.

Dazu wird ein neuer anorganischer Elektrolyt der stöchiometrischen Formel

(y LiAlCl4 + z LiAlOCl2) × n SO2,

wobei y, z und n Faktoren sind, mit y + z = 1 und 1 ≥ z > 0,05
vorgeschlagen.

Die erforderliche Größe von z lässt sich bei gegebener SO2-Konzentration aus der Selbstentladungskurve bestimmen. Je höher z in Relation zu y ist, umso kleiner kann der Schwefeldioxidgehalt des Elektrolyten sein. Vorzugsweise sollte z so groß sein, dass n kleiner oder gleich 1,5 ist.

Der Kapazitätsverlust einer Li-SO2-Zelle bei Bildung der ersten Deckschicht durch die Reduktion von Schwefeldioxid zu Lithiumdithionit kann durch Deckschichtkapazitätskompensationsmaßnahmen, wie sie weiter unten beschrieben werden, ausgeglichen werden.

Besonders bevorzugt wird die Li-SO2-Zelle mit dem neuen anorganischen Elektrolyten LiAlOCl₂ x n SO₂ (y gegen bzw. gleich 0, z gegen bzw. gleichl) befüllt, so dass auch bei starken Temperaturerhöhungen kein Kapazitätsverlust durch Selbstentladung stattfindet und der Schwefeldioxidanteil im Elektrolyten sehr niedrig gehalten werden kann.

Zur Herstellung der neuen Elektrolytlösung bieten sich drei neue Verfahren alternativ oder in Kombination an. Bei den Verfahren wird metallisches Lithium eingesetzt. Da metallisches Lithium sich in Gegenwart von Schwefeldioxidgas sofort mit einer stabilen Deckschicht aus Lithiumdithionit überzieht, wird die Reaktion z.B. in einer schwefeldioxidbegasten Kugelmühle durchgeführt:
1. Gemäß der Gleichung Illb reagiert Lithiummetall mit Leitsalz und Schwefeldioxidgas oder mit herkömmlichen Elektrolyt ab:

   6 Li + 1 SO2 + 2 LiAlCl4 ⇔ Li2S + 2 Li⁺ + 2 AlOCl2⁻ + 4 LiCl

   Die Reaktion ist stark exergonisch und beschleunigt sich, wenn einmal lokal gestartet, leicht selbst. Zur Wärmeabfuhr und besseren Reaktionskontrolle kann die Reaktion in einem Lösungsmittel aus gesättigten Kohlenwasserstoffen kontrollierter vollzogen werden.
   In der Praxis bietet sich die Reaktionsdurchführung in einer schwefeldioxidbegasten Kugelmühle an. Wird z.B. ein Gemisch von Lithiummetallstücke mit dem Salz Lithiumtetrachloroaluminat in der Kugelmühle gemahlen, so bestimmt die Zufuhr von Schwefeldioxidgas die Geschwindigkeit des Reaktionsablaufs und damit der Wärmeproduktion. Statt des Salzes Lithiumtetrachloroaluminat kann auch ein herkömmlicher Elektrolyt, vorzugsweise mit sehr niedrigem SO2-Gehalt eingesetzt werden.
2. Ohne aufwendige Herstellung eines herkömmlichen trockenen Elektrolyten bietet sich folgendes Verfahren an:

   6 Li + 1 SO2 + 4 AlCl3 ⇔ Li2S + 2 Li⁺ + 2 AlOCl2⁻ + 2 Li⁺ + 2 AlCl4⁻

   Die Reaktion ist ebenfalls stark exergonisch und beschleunigt sich leicht selbst. Zur Wärmeabfuhr und besseren Reaktionskontrolle kann die Reaktion in einem Lösungsmittel aus gesättigten Kohlenwasserstoffen kontrollierter vollzogen werden.
   Auch hier bietet sich die oben beschriebene Reaktionsführung an. Statt des Salzes Lithiumtetrachloroaluminat wird das salzartige Aluminiumchlorid mit Schwefeldioxidgas bzw. eine Lösung von Aluminiumchlorid in Schwefeldioxid eingesetzt.
3. Ein dem zweiten Verfahren ähnliches zweistufiges Verfahren kommt ebenfalls ohne aufwendige Herstellung eines trockenen Elektrolyten aus:
   Zunächst wird aus Lithiummetall und Schwefeldioxidgas das elektrolytbildende Lithiumdithionit hergestellt:

   2 Li + 2 SO2 ⇔ Li2S2O4

   Zur besseren Reaktionskontrolle kann auch hier ein Lösungsmittel aus gesättigten Kohlenwasserstoffen zum Einsatz kommen.
   Die Reaktionsführung erfolgt auch hier vorzugsweise in einer Kugelmühle, wobei über die Gaszufuhr von Schwefeldioxid die Reaktionswärme kontrolliert werden kann.
   Im nächsten Schritt wird das erhaltene Lithiumdithionitpulver unter Zugabe von Aluminiumchlorid und vorzugsweise in Gegenwart von Schwefeldioxidgas oder unter Zugabe einer Aluminiumchlorid/ Schwefeldioxid-Lösung zu Schwefel, Schwefeldioxid, Lithiumoxochloroaluminat und Lithiumtetrachloroaluminat umgesetzt. Auch dieser Reaktionsschritt kann in gesättigten Kohlenwasserstoffen durchgeführt werden.

   2 Li2S2O4 + 4 AlCl3 ⇔ S + 3 SO2 + 2 Li⁺ + 2 AlOCl2⁻ + 2 Li⁺ + 2 AlCl4⁻

Feststoffe bzw. das gegebenenfalls eingesetzte Lösungsmittel aus gesättigten Kohlenwasserstoffen können in jedem Reaktionsschritt bzw. -verfahren abgetrennt werden. Durch weiteres Begasen mit Schwefeldioxid oder Evakuieren des Schwefeldioxids kann in den Prozessen oder anschließend das gewünschte n eingestellt werden.

Eine Kombination der Herstellverfahren, wie z.B. Verfahren 3. mit anschließendem Verfahren 1., um zum einen den reinen Lithiumoxochloroaluminatelektrolyten herzustellen und dabei zum anderen ein aufwendiges Trocknungsverfahren zur Herstellung eines trockenen herkömmlichen Elektrolyten zu vermeiden, ist ebenso möglich.

Die positive aktive Masse der positiven Elektrode steht in der Zelle mit dem Elektrolyt in Kontakt und kann deswegen primär nur mit diesem reagieren. Der Elektrolyt ist deshalb entscheidend für mögliche Reaktionen der in den Elektroden enthaltenen Materialien. Eine problematische Eigenschaft eines SO2-haltigen Elektrolyten ist dessen hohe Korrosivität

Als positive aktive Masse kann eine Vielzahl verschiedener Verbindungen verwendet werden. Für Batteriezelle mit Lithium oder einem äquivalenten Metall und einem schwefeldioxidhaltigen Elektrolyten können für herkömmliche Batteriezellen typischerweise positive aktive Massen auf Basis eines Oxids, insbesondere des Lithiumkobaltoxids als 4V-System, oder eines Phosphats, insbesondere des Lithiumeisenphosphats als 3V-System verwendet werden.

In einem weiteren Aspekt betrifft die Erfindung eine Batteriezelle mit einer negativen Elektrode, einer positiven Elektrode und einem Elektrolyten, wobei die aktive Masse der positiven Elektrode Lithiumsulfid, Li2S, enthält.

Dabei kann die positive Elektrode der Batteriezelle in einer Ausführungsform eine poröse Struktur mit der ebenfalls oben beschriebenen intraporösen Separatorschicht aufweisen. Alternativ dazu kann die positive Elektrode eine beliebige, beispielsweise eine herkömmliche Struktur sowie eine Lithiumdithionitschicht auf der Oberfläche der porösen positiven Elektrodenschicht als Separatorschicht oder alternativ eine herkömmliche Separatorschicht aufweisen.

Weiterhin weist die Batteriezelle einen Elektrolyten auf. In einer Ausführungsform kann dieser ein herkömmlicher Elektrolyt sein. Alternativ dazu kann die Batteriezelle einen beliebigen SO2-haltigen Elektrolyten aufweisen. In einer bevorzugten Ausführungsform kann die Batteriezelle den oben beschriebenen SO2-haltigen Elektrolyten aufweisen.

Die positive Elektrode und in der allgemeinen Ausführungsform auch die negative Elektrode besitzen dabei eine poröse Struktur, wie oben beschrieben. Die poröse Struktur ist im Allgemeinen zumindest teilweise mit Elektrolyt gefüllt. Da die ionische Leitfähigkeit des Elektrolyten in der Regel um mehrere Größenordnungen höher ist als die ionische Leitfähigkeit in den aktiven Massen, wird bei ausreichender Porosität eine genügende Ionenleitfähigkeit innerhalb der Elektroden gewährleistet. Die Porosität der Elektroden sollte in der Regel mindestens 10% betragen, vorzugsweise mehr als 25%.

In einer bevorzugten Ausführungsform können die oben beschriebenen Ausführungsformen der Batteriezelle eine positive Elektrode mit einer aktiven Masse aufweisen, die Lithiumsulfid, Li2S, als aktives Metall enthält. Besonders bevorzugt sind dabei aktive positive Massen aus Lithiumsulfid-Kohlenstoff, Li2S/C. Der Grund für die Bevorzugung liegt in der äußerst geringen Löslichkeit von Schwefel bzw. Polysulfanen in dem SO2-basierenden Elektrolyten Lithiumsulfid kann mittels verschiedener chemischer Verfahren hergestellt werden, die beispielsweise in der WO 2012/171889 beschrieben sind. Der besonders bevorzugte Lithiumsulfid-Kohlenstoff, Li2S/C, kann aus Lithiumsulfid, Li2S, und sogenanntem Carbon Black, Kohlenstoff, mittels eines trockenen Kugelmühlenverfahrens oder gemäß einem in der WO 2012/171889 beschriebenen Verfahren hergestellt werden.

Wie nachfolgende Tabelle zeigt, ist Li2S gegenüber Li/Li⁺ ein 2-Volt System. Zwar weist die Zelle im Vergleich mit anderen Batteriezellen damit eine vergleichsweise geringe Spannung auf, jedoch kann eine Batteriezelle mit Li2S als positive aktive Masse viel Energie pro Masse speichern.

**2V-Systeme:**

| Material | Mittleres Potential V vs. Li/Li⁺ | Praktische spezifische Energie bzgl. Aktivmaterial Wh/kg |
|---|---|---|
| LiTiS2 | 2,1 | 426 |
| Li2S | 2,0 | 800 |
| Li4Ti5O12 | 1,5 | 263 |

Spätestens während des ersten Ladevorgangs bildet sich in der besonders bevorzugten Batteriezelle mit Lithiumsulfid, Li2S, als aktiver positiver Masse auf der Oberfläche der positiven Elektrodenschicht direkt die Deckschicht aus Lithiumdithionit aus, da hier der Ladevorgang unterhalb 3V vs. Li/ Li⁺ stattfindet. Auf der negativen Elektrode beginnt das Wachstum der metallischen Lithiumwhisker, die mit zunehmender Ladung in die Poren der bevorzugten positiven Elektrode eindringen. Die Zellspannung ist dabei typischerweise kleiner 3 V, sodass die Bedeckung der Oberfläche der positiven Elektrode mit Lithiumdithionit bei normalem Betrieb erhalten bleibt. Zur Aktivierung der positiven Elektrode kann die Zelle jedoch bis maximal < 4 V geladen werden.

Bei der Entladung der Zelle wird in der negativen Elektrode das metallisch abgeschiedene Lithium oxidativ wieder aufgelöst und in der positiven Elektrode wird wieder Schwefel zu Lithiumsulfid reduziert.

Bevorzugt wird die Kapazität der Deckschicht aus Lithiumdithionit auf der positiven Elektrodenschicht durch ein wie unten beschriebenes Verfahren kompensiert.

Die Zelle ist weiterhin tiefentladefest, unabhängig davon ob die positive oder die negative Elektrode kapazitätsbestimmend ist, d.h. zum Ende des Entladens der Zelle als Erste entladen ist. Ist die negative Elektrode kapazitätsbestimmend, so steigt nach der vollständigen Lithiumauflösung das Potential des Ableitelements von 0 V vs. Li/ Li⁺ auf das Potential der positiven Elektrode von z.B. 2 V vs. Li/ Li⁺, wobei die Zellspannung auf 0V zurückgeht. Ist die positive Elektrode kapazitätsbestimmend, so fällt das Potential der positiven Elektrode auf 0V vs. Li/ Li⁺ und die Zellspannung bricht auf 0 V zusammen. Da die aktive Masse Lithiumsulfid nicht weiter reduzierbar ist, erfolgt für das Lithiumsulfid keine weitere chemische Reaktion. Je nachdem ob bzw. in welchem Umfang im Kohlenstoff, der das Lithiumsulfid bedeckt, graphitische Anteile enthalten sind, erfolgt bei ca. 0,3 V vs. Li/ Li⁺ noch eine reversible Einlagerung von Lithiumionen in das Graphitgitter. Die Lithiumdithionitschicht ist in allen Fällen stabil.

Die Zelle in der bevorzugten Ausführungsform erreicht mit Kompensation der Deckschichtkapazität, wie unten beschrieben, eine spezifische Energie von über 400 Wh/kg und Energiedichte von über 1000 Wh/l. Wie aus der o.a. Tabelle für 2V-Systeme sind diese Werte im Vergleich mit 2V-Systemen anderer positiver Massen, beispielsweise Li4Ti5O12, sehr hoch und damit vorteilhaft.

Die Kapazität der Zelle wird bei leichter Überkompensation der Deckschichtkapazität der positiven Elektrode (wie unten beschrieben) dann von der Menge des abgeschiedenen Lithiums an der negativen Elektrode bestimmt. Wegen der hohen Zykelstabilität des Lithiumtitanats im SO2-basierenden Elektrolyten, d.h. eine Kapazitätsabnahme des Lithiumtitanats durch vielfaches Laden- und Entladen ist praktisch nicht festzustellen, ist dann die negative Elektrode kapazitätsbestimmend. Im Falle der Tiefentladung der Zelle auf 0 V, ist dann sämtliches metallische Lithium aufgelöst. Denn bei der Tiefentladung steigt das Potential des elektronisch leitenden Substrats der negativen Elektrode, z.B. ein Nickelblech, von 0V vs. Li/ Li⁺ auf das Potential der positiven Elektrode (je nach Ladezustand ca. 1,5V vs. Li/ Li⁺) an. Die gemessene Zellspannung bricht auf 0 V zusammen. Die Deckschicht aus Lithiumdithionit auf der Oberfläche des Ableitelements verändert sich bis ca. 4V vs. Li/ Li⁺ nicht, so dass die Zelle sogar bis zu einer Zellspannung bis zu minus 2,5 V in die Umkehrpolarität getrieben werden könnte. Die Zelle ist also auf jeden Fall bis 0 V Zellspannung tiefentladefest.

In der bevorzugten Ausführungsform ist im SO2-haltigen Elektrolyten auch der Potentialbereich zwischen 3,0 und 4,0 V vs. Li/ Li⁺ für aktive positive Massen möglich, wenn sichergestellt wird, dass die Oberfläche mit Kohlenstoff oder einem anderen Pi- bzw. D- Elektronen anbietenden leitfähigen Material beschichtet ist.

Für solche Zellen, die z.B. im vollständig entladenen Zustand hergestellt werden, deren Lithiumionenvorrat also in der aktiven positiven Masse enthalten ist, muss bei dem ersten Laden sichergestellt sein, dass sich auf der porösen positiven Elektrodenschicht zunächst eine Deckschicht aus Lithiumdithionit bildet. Die dafür erforderliche Deckschichtkapazität könnte einerseits durch das unten beschriebene Verfahren direkt in die positive Elektrode eingebracht werden, dann würde sich die Deckschicht aus Lithiumdithionit auf der porösen positiven Elektrodenschicht durch Reduktion des Schwefeldioxids direkt ausbilden. Alternativ würde das Ableitelement der negativen Elektrode mit dem unten beschriebenen Verfahren mit der Deckschichtkapazitätskompensation ausgestattet. Die Zelle würde dann vor dem ersten Laden einmal Entladen werden, so dass sich dabei auf der Oberfläche der porösen positiven Elektrodenschicht die Lithiumdithionitschicht ausbilden würde.

Die Kapazität der Zelle wird bei leichter Überkompensation der Deckschichtkapazität der positiven Elektrode (wie unten beschrieben) dann von der Menge des abgeschiedenen Lithiums an der negativen Elektrode bestimmt. Wegen der hohen Zykelstabilität des Lithiumeisenphosphats im SO2-haltigen Elektrolyten, d.h. eine Kapazitätsabnahme des Lithiumeisenphosphats durch vielfaches Laden- und Entladen ist praktisch nicht festzustellen, ist dann die negative Elektrode kapazitätsbestimmend. Im Falle der Tiefentladung der Zelle auf 0 V, ist dann sämtliches metallische Lithium aufgelöst. Bei der Tiefentladung steigt dann das Potential des elektronisch leitenden Substrats der negativen Elektrode, z.B. ein Nickelblech, von 0V vs. Li/ Li⁺ auf das Potential der positiven Elektrode (je nach Ladezustand ca. 3V vs. Li/ Li⁺) an. Die gemessene Zellspannung bricht auf 0 V zusammen. Die Deckschicht auf der Oberfläche des Ableitelements verändert sich bis ca. 4V vs. Li/ Li⁺ praktisch nicht, so dass die Zelle sogar bis zu einer Zellspannung bis zu minus 1V in die Umkehrpolarität getrieben werden könnte. Die Zelle ist also zumindest bis 0 V Zellspannung tiefentladefest.

Wird eine Zelle nach einer der oben beschriebenen Ausführungsformen mit einem herkömmlichen Elektrolyten befüllt, so ist es vorteilhaft, neben der Kompensation der Deckschichtkapazität/en auch die Kapazität der Selbstentladung, die durch eine chemische Reaktionsfolge, wie oben beschrieben, zwischen Elektrolyt und Lithiumdithionit verursacht wird, auszugleichen. Vorteilhaft bedeutet hier, dass die Zelle ohne Kompensation der Deckschichtkapazität und der Kapazität, die durch Selbstentladung verbraucht wird, eine deutlich niedere Kapazität besitzt und damit deutlich geringere Kennwerte der spezifischen Energie und der Energiedichte hat. Nachteilig ist durch die Langsamkeit der Selbstentladung der monatelange bzw. bis ein Jahr dauernde Prozess der Kompensation der Selbstentladung. Er könnte durch Temperaturerhöhung etwas beschleunigt werden. Um in der Zelle die Selbstentladung und damit, wie unten beschrieben, eine Kompensation der Kapazität der Selbstentladung zu beschleunigen, würde auch die Befüllung mit einem aluminiumchloridsauren Elektrolyten behilflich sein, da sich das gebildete Lithiumdithionit gemäß Gl. II schneller umsetzt.

In einem weiteren Aspekt betrifft die Erfindung Verfahren zur Herstellung von Elektroden mit einer Deckschichtkapazitätskompensation und mit einer Kompensation der Kapazität der Selbstentladung für Batteriezellen, die für SO2-haltigen Elektrolyten geeignet sind.

In einer Li-SO2-Zelle kann je nach Ausführungsform und Verwendung von aktiven negativen bzw. positiven Massen auf der negativen oder auf der positiven oder auf beiden Elektroden eine Deckschicht aus Lithiumdithionit gebildet werden. Bei Verwendung von herkömmlichen Elektrolyten reagiert, wie oben beschrieben, das gebildete Lithiumdithionit mit dem Elektrolyten weiter ab, bis das Gleichgewicht Gl. IVa eingestellt ist.

Die Kapazitäten, die bei der Bildung und der Weiterreaktion des Lithiumdithionits verbraucht werden, verringern die Kapazität der Batteriezelle.

Diese Kapazitätsverluste können durch das Einbringen einer äquivalenten Menge an metallischem Lithium in die Batteriezelle kompensiert werden Das Einbringen des metallischen Lithiums in die Batteriezelle kann, wie nachfolgend beschrieben, bei der Herstellung der negativen Elektrode stattfinden. Alternativ kann das metallische Lithium auch analog bei der Herstellung der positiven Elektrode in die Zelle eingebracht werden.

In einem ersten Verfahrensschritt eines beispielhaften Herstellungsverfahrens wird die aktive negative Masse, in einem Ausführungsbeispiel Graphit, mit einem Binder in einem Lösungsmittel gemischt. Typischerweise weist diese Mischung die Konsistenz einer höherviskosen Paste auf.

Im nächsten Schritt wird diese Mischung auf das flächige Ableitelement der negativen Elektrode aufgetragen oder bei einem dreidimensionalen Ableitelement, wie z.B. Nickelschaum, einpastiert.

In einem weiteren Verfahrensschritt wird z.B. durch Trocknen unter Wärmezufuhr das Lösungsmittel verdampft.

Danach werden die nun lösungsmittelfreien Elektrodenrohlinge gewalzt und damit gepresst. Schließlich werden die Elektroden zugeschnitten.

Bei der Elektrodenherstellung für Batteriezellen, die für SO2-haltigen Elektrolyten geeignet sind, kann das metallische Lithium nun in beliebiger Form entweder in die lösungsmittelfreien Elektrodenrohlinge vor dem Walzen oder in einem Zusatzschritt in die gewalzten Elektrodenrohlinge bzw. die zugeschnittenen Elektroden in die Elektrode eingewalzt werden.

Das metallische Lithium kann in einer Ausführungsform in Form einer Folie aus metallischem Lithium auf den Elektrodenrohling bzw. auf die Elektrode aufgelegt und eingewalzt werden. In einer alternativen Ausführungsform kann das metallische Lithium in Form eines trockenen, partikulären Pulvers auf den Elektrodenrohling bzw. auf die Elektrode aufgebracht und eingewalzt werden. In einer weiteren alternativen Ausführungsform kann z.B. mit einer Schutzschicht versehenes partikuläres Lithium, insbesondere partikuläres metallisches Lithium/ Lithiumsulfid-Komposit, aufgebracht und eingewalzt werden. Verfahren zur Herstellung des vorzugsweisen partikulären metallischen Lithium/ Lithiumsulfid-Komposits sind aus der WO2013068523 bekannt, auf die hier vollumfänglich Bezug genommen wird.

Somit können sowohl die negative Elektrode und/oder die positive Elektrode eine Schicht, die metallisches Lithium enthält, aufweisen, die vor dem Assemblieren der Batteriezelle vorzugsweise in die porösen Elektrode(n) eingebracht worden ist.

Um ein Anhaften des Lithiums, sowohl in Form der metallischen Folie als auch in partikulärer Form an der Walze zu verhindern, kann in einer Ausführungsform eine polymere Folie aus z.B. Polyethylen oder Polypropylen beim Walzvorgang mit einer Metallwalze als Trennmittel zwischen Lithium und Walze geführt werden. Alternativ dazu kann eine entsprechende Walze mit einer entsprechenden polymeren Oberfläche, beispielsweise einer Polyethylen- oder Polypropylenoberfläche, zum Einwalzen verwendet werden.

Wegen der Reaktivität des metallischen Lithiums sind die Bedingungen eines Trockenraumes zu erfüllen. Eine verminderte Reaktivität des beschichteten Lithiummetalls führt auch zu einer Verringerung der Ansprüche an den Wassergehalt des Trockenraumes während des Einbringens des Lithiummetalls bzw. in der folgenden Assemblierung.

## Patentansprüche

1. Wiederaufladbare nichtwässrige elektrochemische Batteriezelle (3) mit
- einer negativen Elektrode (5) mit einem elektronisch leitenden Substrat, und
- einem schwefeldioxidhaltigen Elektrolyten und
- einer positiven Elektrode (4) mit einer porösen Struktur, wobei die aktive Masse der positiven Elektrode in der porösen Struktur enthalten ist, und wobei die aktive Masse der positiven Elektrode in Nachbarschaft zu dem elektronisch leitenden Substrat (12) der negativen Elektrode angeordnet ist, und wobei
- mindestens ein Teil des aus der Elektrodenreaktion an der negativen Elektrode resultierenden aktiven Metalls (24) in die Poren (14) der positiven Elektrode eindringt, und wobei die gesamte Oberfläche der aktiven Masse der positiven Elektrode (4) mit einer Schicht Metalldithionit bedeckt ist, und
die aktive Masse der positiven Elektrode (4) in dem Elektrolyten ein Redoxpotential von kleiner oder gleich 4,0 Volt vs. Li/Li⁺ aufweist.

2. Batteriezelle (3) nach Anspruch 1, wobei die aktive Masse der positiven Elektrode (4) in dem Elektrolyten ein Redoxpotential von kleiner oder gleich 3,0 Volt vs. Li/Li⁺ aufweist.

3. Batteriezelle (3) nach einem der vorstehenden Ansprüche, wobei die aktive Masse der positiven Elekrode (4) in der porösen Struktur mit einem Gewichtsanteil von mindestens 50%, bevorzugt mindestens 80% enthalten ist.

4. Batteriezelle (3) nach einem der vorstehenden Ansprüche, wobei die Oberfläche der positiven Elektrode (4) mit Kohlenstoff, bevorzugt Graphit, oder einem Sulfid bedeckt ist.

5. Batteriezelle (3) nach einem der vorstehenden Ansprüche, wobei ein Ableitelement einer Elektrode (4, 5) Kohlenstoff enthält, und bevorzugt Kohlefasergewebe oder Kohlefaservlies aufweist.

6. Batteriezelle (3) nach einem der vorstehenden Ansprüche, wobei der schwefeldioxidhaltige Elektrolyt im Wesentlichen Elektrolyte enthält, die nach der stöchiometrischen Formel (y LiAlCl4 + z LiAlOCl2) × n SO2
mit y+z=1 und 0,05<z≤1, n>0 zusammengesetzt sind.

7. Batteriezelle (3) nach Anspruch 6, wobei der Elektrolyt mindestens eines der folgenden Leitsalze, wie Halogenide, Oxalate, Borate, Phosphate, Arsenate oder Gallate oder weitere Lösungsmittel aufweist.

8. Batteriezelle (3) nach Anspruch 6-7, wobei n≤3,5, besonders bevorzugt n≤1,5 ist.

9. Batteriezelle nach einem der Ansprüche 6-8, wobei z≥0,1, besonders bevorzugt z≥0,5 ist.

10. Batteriezelle (3) nach einem der vorstehenden Ansprüche, wobei die positive aktive Masse Lithiumsulfid, Li2S, aufweist, bevorzugt ein Lithiumsulfid/ Kohlenstoff-Komposit.

11. Batteriezelle (3) nach einem der vorstehenden Ansprüche, wobei beim Herstellprozess einer Elektrode (4) die aktive Masse der Elektrode mit einem Lösungsmittel gemischt und danach auf oder in das Ableitelement der Elektrode aufgetragen oder einpastiert wird, und wobei das Lösungsmittel entfernt wird und nach dem Entfernen des Lösungsmittels auf oder in die negative Elektrode (5) und/oder die positive Elektrode vor dem Assemblieren der Batteriezelle (3) eine Schicht, die metallisches Lithium enthält, aufgetragen oder eingebracht wurde.

12. Wiederaufladbare nichtwässrige elektrochemische Batteriezelle mit
- einer negativen Elektrode, und
- einer positiven Elektrode, und
- einem schwefeldioxidhaltigen Elektrolyten, wobei der schwefeldioxidhaltige Elektrolyt Elektrolyte enthält, die nach der stöchiometrischen Formel (y LiAlCl4 + z LiAlOCl2) × n SO2 mit y+z=1 und 0,5<z≤1, n>0 zusammengesetzt sind.

13. Batteriezelle nach Anspruch 12, wobei der Elektrolyt mindestens eines der folgenden Leitsalze, wie Halogenide, Oxalate, Borate, Phosphate, Arsenate oder Gallate oder weitere Lösungsmittel aufweist.

14. Batteriezelle nach einem der Ansprüche 12-13, wobei die positive Elektrode Lithiumsulfid, Li2S, bevorzugt ein Lithiumsulfid/ Kohlenstoff-Komposit, als aktive Masse enthält.

15. Batteriezelle nach einem der Ansprüche 12-14, wobei beim Herstellprozess einer Elektrode die aktive Masse der Elektrode mit einem Lösungsmittel gemischt und danach auf oder in das Ableitelement der Elektrode aufgetragen oder einpastiert wird, und wobei das Lösungsmittel entfernt wird und nach dem Entfernen des Lösungsmittels auf oder in die negative Elektrode und/oder die positive Elektrode vor dem Assemblieren der Batteriezelle eine Schicht, die metallisches Lithium enthält, aufgetragen oder eingebracht wurde.

16. Batteriezelle nach einem der Ansprüche 12-13, wobei ein Ableitelement einer Elektrode Kohlenstoff enthält und bevorzugt ein Kohlefasergewebe oder Kohlefaservlies aufweist.

17. Batteriezelle nach einem der Ansprüche 12-16, wobei ein aktives Kationen ausgewählt ist aus einer Gruppe bestehend aus den Alkalimetallen, den Erdalkalimetallen und den Metallen der zweiten neben Gruppe des Periodensystems.

## Claims

1. Rechargeable non-aqueous electrochemical battery cell (3), comprising
- a negative electrode (5) having an electronically conductive substrate, and
- a sulfur dioxide-containing electrolyte, and
- a positive electrode (4) having a porous structure, wherein the active material of the positive electrode is contained in the porous structure, and wherein the active material of the positive electrode is arranged in the vicinity of the electronically conductive substrate (12) of the negative electrode, and wherein
- at least part of the active metal (24) resulting from the electrode reaction at the negative electrode penetrates into the pores (14) of the positive electrode, and wherein the entire surface of the active material of the positive electrode (4) is covered with a layer of metal dithionite, and
the active material of the positive electrode (4) in the electrolyte has a redox potential of less than or equal to 4.0 volts vs. Li/Li⁺.

2. Battery cell (3) according to claim 1, wherein the active material of the positive electrode (4) in the electrolyte has a redox potential of less than or equal to 3.0 volts vs. Li/Li⁺.

3. Battery cell (3) according to either of the preceding claims, wherein the active material of the positive electrode (4) is contained in the porous structure in a weight percentage of at least 50%, preferably at least 80%.

4. Battery cell (3) according to any of the preceding claims, wherein the surface of the positive electrode (4) is covered with carbon, preferably graphite, or a sulfide.

5. Battery cell (3) according to any of the preceding claims, wherein a discharge element of an electrode (4, 5) contains carbon, and preferably comprises woven carbon fiber fabric or non-woven carbon fiber fabric.

6. Battery cell (3) according to any of the preceding claims, wherein the sulfur dioxide-containing electrolyte substantially contains electrolytes which are composed in accordance with the stoichiometric formula (y LiAlCl₄ + z LiAlOCl₂) x n SO₂ where y + z = 1 and 0.05 < z ≤ 1 and n > 0.

7. Battery cell (3) according to claim 6, wherein the electrolyte comprises at least one of the following conductive salts, such as halides, oxalates, borates, phosphates, arsenates or gallates or other solvents.

8. Battery cell (3) according to either claim 6 or claim 7, wherein n ≤ 3.5, particularly preferably n ≤ 1.5.

9. Battery cell according to any of claims 6 to 8, wherein z ≥ 0.1, particularly preferably z ≥ 0.5.

10. Battery cell (3) according to any of the preceding claims, wherein the positive active material comprises lithium sulfide, Li₂S, preferably a lithium sulfide/carbon composite.

11. Battery cell (3) according to any of the preceding claims, wherein during the production process of an electrode (4), the active material of the electrode is mixed with a solvent and then applied or pasted onto or into the discharge element of the electrode, and wherein the solvent is removed and after the solvent has been removed, a layer which contains metal lithium is applied or introduced onto or into the negative electrode (5) and/or the positive electrode before the battery cell (3) is assembled.

12. Rechargeable non-aqueous electrochemical battery cell, comprising
- a negative electrode, and
- a positive electrode, and
- a sulfur dioxide-containing electrolyte, wherein the sulfur dioxide-containing electrolyte contains electrolytes which are composed in accordance with the stoichiometric formula (y LiAlCl₄ + z LiAlOCl2) x n SO₂ where y + z = 1 and 0.5<z≤1 and n > 0.

13. Battery cell according to claim 12, wherein the electrolyte comprises at least one of the following conductive salts, such as halides, oxalates, borates, phosphates, arsenates or gallates or other solvents.

14. Battery cell according to either claim 12 or claim 13, wherein the positive electrode contains lithium sulfide, Li₂S, preferably a lithium sulfide/carbon composite, as active material.

15. Battery cell according to any of claims 12 to 14, wherein during the production process of an electrode, the active material of the electrode is mixed with a solvent and then applied or pasted onto or into the discharge element of the electrode, and wherein the solvent is removed and after the solvent has been removed, a layer which contains metal lithium is applied or introduced onto or into the negative electrode and/or the positive electrode before the battery cell is assembled.

16. Battery cell according to either claim 12 or claim 13, wherein a discharge element of an electrode contains carbon and preferably comprises a woven carbon fiber fabric or non-woven carbon fiber fabric.

17. Battery cell according to any of claims 12 to 16, wherein an active cation is selected from a group consisting of the alkali metals, the alkaline earth metals and the metals of group 12 of the periodic table.

## Revendications

1. Élément de batterie électrochimique non aqueux rechargeable (3) comportant
- une électrode négative (5) comportant un substrat électroniquement conducteur, et
- un électrolyte contenant du dioxyde de soufre, et
- une électrode positive (4) comportant une structure poreuse, la masse active de l'électrode positive étant contenue dans la structure poreuse, et la masse active de l'électrode positive étant disposée à proximité du substrat électroniquement conducteur (12) de l'électrode négative, et
- au moins une partie du métal actif (24) résultant de la réaction d'électrode au niveau de l'électrode négative pénétrant dans les pores (14) de l'électrode positive, et
la surface totale de la masse active de l'électrode positive (4) étant recouverte d'un couche de dithionite métallique, et
la masse active de l'électrode positive (4) dans l'électrolyte présentant un potentiel redox inférieur ou égal à 4,0 volts par rapport à Li/Li⁺.

2. Élément de batterie (3) selon la revendication 1, dans lequel la masse active de l'électrode positive (4) dans l'électrolyte présente un potentiel redox inférieur ou égal à 3,0 volts par rapport à Li/Li⁺.

3. Élément de batterie (3) selon l'une des revendications précédentes, dans lequel la masse active de l'électrode positive (4) est contenue dans la structure poreuse en une fraction pondérale d'au moins 50 %, de préférence d'au moins 80 %.

4. Élément de batterie (3) selon l'une des revendications précédentes, dans lequel la surface de l'électrode positive (4) est recouverte de carbone, de préférence de graphite, ou d'un sulfure.

5. Élément de batterie (3) selon l'une des revendications précédentes, dans lequel un élément de décharge d'une électrode (4, 5) contient du carbone et présente de préférence un tissu en fibres de carbone ou un non-tissé en fibres de carbone.

6. Élément de batterie (3) selon l'une des revendications précédentes, dans lequel l'électrolyte contenant du dioxyde de soufre contient sensiblement des électrolytes qui sont composés selon la formule stœchiométrique (y LiAlCl4 + z LiAlOCl2) x n SO2, dans laquelle y+z=1 et 0,05<z≤1, n>0.

7. Élément de batterie (3) selon la revendication 6, dans lequel l'électrolyte présente au moins l'un des sels conducteurs suivants, tels que les halogénures, les oxalates, les borates, les phosphates, les arséniates ou les gallates ou d'autres solvants.

8. Élément de batterie (3) selon la revendication 6 à 7, dans lequel n≤53,5, de manière particulièrement préférée n≤1,5.

9. Élément de batterie selon l'une des revendications 6 à 8, dans lequel z≥0,1, de manière particulièrement préférée z≥0,5.

10. Élément de batterie (3) selon l'une des revendications précédentes, dans lequel la masse active positive présente du sulfure de lithium, Li2S, de préférence un composite sulfure de lithium/carbone.

11. Élément de batterie (3) selon l'une des revendications précédentes, dans lequel, lors du processus de fabrication d'une électrode (4), la masse active de l'électrode est mélangée avec un solvant puis est appliquée ou collée sur ou dans l'élément de décharge de l'électrode, et dans lequel le solvant est éliminé et, après l'élimination du solvant, une couche contenant du lithium métallique est appliquée ou introduite sur ou dans l'électrode négative (5) et/ou l'électrode positive avant l'assemblage de l'élément de batterie (3).

12. Élément de batterie électrochimique non aqueux rechargeable, comportant
- une électrode négative, et
- une électrode positive, et
- un électrolyte contenant du dioxyde de soufre, l'électrolyte contenant du dioxyde de soufre contenant des électrolytes qui sont composés selon la formule stœchiométrique (y LiAICI4 + z LiAlOCl2) x n SO2, dans laquelle y+z=1 et 0,5<z≤1, n>0.

13. Élément de batterie selon la revendication 12, dans lequel l'électrolyte présente au moins l'un des sels conducteurs suivants, tels que les halogénures, les oxalates, les borates, les phosphates, les arséniates ou les gallates ou d'autres solvants.

14. Élément de batterie selon l'une des revendications 12 à 13, dans lequel l'électrode positive contient du sulfure de lithium, Li2S, de préférence un composite sulfure de lithium/carbone, en tant que masse active.

15. Élément de batterie selon l'une des revendications 12 à 14, dans lequel, lors du processus de fabrication d'une électrode, la masse active de l'électrode est mélangée avec un solvant puis est appliquée ou collée sur ou dans l'élément de décharge de l'électrode, et dans lequel le solvant est éliminé et, après l'élimination du solvant, une couche contenant du lithium métallique est appliquée ou introduite sur ou dans l'électrode négative et/ou l'électrode positive avant l'assemblage de l'élément de batterie.

16. Élément de batterie selon l'une des revendications 12 à 13, dans lequel un élément de décharge d'une électrode contient du carbone et présente de préférence un tissu en fibres de carbone ou un non-tissé en fibres de carbone.

17. Élément de batterie selon l'une des revendications 12 à 16, dans lequel un cation actif est choisi dans un groupe constitué des métaux alcalins, des métaux alcalino-terreux et des métaux du deuxième sous-groupe du tableau périodique.
